# EUROPEAN PATENT APPLICATION

(11) **EP 1 323 596 A1**
(43) Date of publication of application: **02.07.2003**
(21) Application number: 02028062.4
(22) Date of filing: 17.12.2002
(51) Int. Cl.: B60R 21/26, F42B 3/12, F42C 19/12, C06B 33/00

(54) **Initiator and gas generator**

(30) Priority: 25.12.2001 JP 2001392079
(71) Applicant: TAKATA CORPORATION, Minato-ku, Tokyo 106-8510 (JP)
(72) Inventor: Furusawa, Takashi, Minato-ku, Tokyo 106-8510 (JP); Chikaraishi, Tsuneo, Minato-ku, Tokyo 106-8510 (JP); Koga, Koji, Minato-ku, Tokyo 106-8510 (JP); Amano, Junya, Minato-ku, Tokyo 106-8510 (JP); Tashiro, Kazuhiro, Minato-ku, Tokyo 106-8510 (JP)
(74) Representative: Banzer, Hans-Jörg, Dipl.-Ing.

(57) **Abstract**

In order to provide an improved initiator easy to be manufactured and low in manufacturing cost, as well as an improved gas generator equipped with such an improved initiator, an amount of reactant (54) is received in a casing (56) of an initiator (50). A pin (66) is connected with the head (54), while another pin (62) is inserted in a hole (60) of the head (54) and is secured therein by virtue of a material such as a glass. The reactant (58) contains an amount of electrically conductive particles (58a), such as metal particles or electrically conductive metal oxide particles. A bridge wire is not used.

## Description

### [Technical Field of the Invention]

The present invention relates to an initiator which can be suitably incorporated into a gas generator such as an air bag apparatus and a seat belt pretensionor. This invention also relates to a gas generator equipped with such an initiator.

### [Description of the Related Art]

An air bag apparatus provided in a rapidly moving body such as an automobile vehicle is usually constructed in a manner such that a bag-like air bag is quickly inflated by virtue of a gas generator called inflator. Such a gas generator comprises a gas generating agent and an initiator provided for initializing a gas generating reaction of the gas generating agent. Conventionally, such an initiator comprises a reactant, a filament (a bridge wire) serving as a resistive heating element for initializing a predetermined reaction in the reactant.

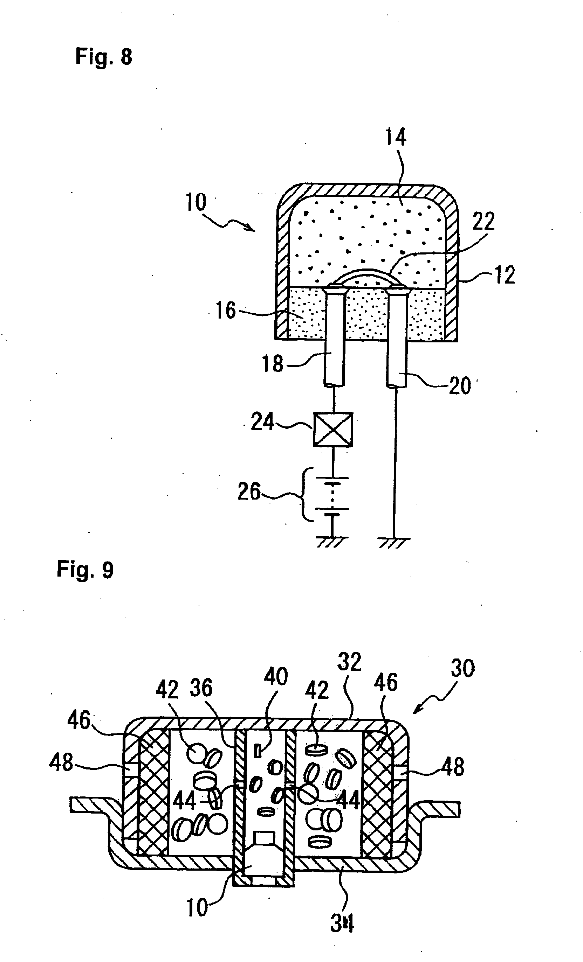

One example of a conventional initiator will be described below with reference to Fig. 8.

As shown, a conventional initiator 10 includes a substantially cap-like casing 12 having an opened rear portion (lower portion in Fig. 8). An amount of reactant 14 is received in the casing 12. Actually, the rear portion of the casing 12 is sealed by an insulating material 16 such as a sintered glass and the like. A pair of electrodes 18, 20 are provided penetrating through the insulating material 16 in a manner such that their front end portions are facing the interior of the casing 12.

A filament 22 is bridged between the front end portions of the two electrodes 18 and 20. In fact, both ends of the filament 22 are welded to the surfaces of the front end portions of the respective electrodes 18 and 20. Further, the filament 22 is also in contact with the reactant 14 within the casing 12.

However, the two electrodes 18, 20 and the casing 12 are arranged separately from each other so that they are not electrically connected with each other.

In this way, the initiator 10 is constructed in the above-described manner such that one electrode 18 is connected to the positive electrode of an automobile battery 26 through a control circuit 24 equipped with a voltage step-up circuit and the like, while the other electrode 20 is connected (earth connection) to the main body of an automobile. In fact, the negative electrode of the battery 26 is connected to the main body of an automobile.

When there is an accident such as a collision between automobiles and the like, a switching element within the control circuit 24 will become ON, so that a voltage will be applied from the battery 26 to the filament 22 through the respective electrodes 18 and 20. As a result, the filament 22 will produce a heat which causes the ignition of the reactant 14, thus initializing the reaction of the reactant. The reaction of the reactant 14 thus causes the generation of a high pressure gas and a large amount of heat, so that the gas generating agent within the gas generator will cause a gas generating reaction.

Here, the reactant includes a first reactant and a second reactant. For example, the first reactant is arranged around the filament 22 and is a mixture comprising a lead styphnate and an aluminum powder, and the second reactant is arranged around the first reactant and consists of BKNO₃ or a black powder. In this way, the first reactant will quickly undergo a heat generating reaction, while the second reactant will start its reaction by virtue of a heat produced from the first reactant, thereby generating a high pressure hot gas as well as an amount of fine particles.

One example of a conventional gas generator equipped with the initiator 10 will be described in the following with reference to Fig. 9. As shown, a conventional gas generator 30 includes a container having an outer case consisting of an upper housing 32 and a lower housing 34, and having a cylindrical partition member 36 disposed within the outer case. Actually, one end of the cylindrical partition member 36 protrudes downwardly through an opening formed on the bottom of the lower housing 34. The internal circumferential surface of the opening and the external circumferential surface of the cylindrical partition member 36 are welded together by means of laser beam welding and the like. An amount of igniting agent (booster propellant) 40 is received in the cylindrical partition member 36, while an amount of gas generating agent (main propellant) 42 is arranged on the outside of the cylindrical partition member 36.

As shown in the drawing, the initiator 10 is disposed at one end of the cylindrical partition member 36. In this way, once the igniting agent 40 is ignited by the initiator 10, gas will erupt through openings 44 of the cylindrical partition member 36, thus igniting the gas generating agent 42. As a result, a large amount of gas is generated rapidly, passing through filters 46 consisting of meshes and the like, and further passing through openings 48. Consequently, the gas will erupt out of the gas generator 30, thereby inflating an air bag. In fact, Fig. 9 shows only one example of a conventional gas generator, and there are many types of gas generators having shapes different from those shown in the drawing.

### [Problems to be Solved by the Invention]

However, with regard to the conventional initiator shown in Fig. 8, in order to ensure a predetermined constant electric resistance for the filament 22, manufacturing process is required to perform a strict management on the length of the filament 22 as well as a welding condition when connecting the same. As a result, it is difficult to reduce time and labor in the manufacturing process, hence making it impossible to reduce the production cost.

Accordingly, it is an object of the present invention to provide an improved initiator which does not require the use of a resistive heat generator such as a filament and the like, and can be manufactured easily and thus at a reduced cost. It is another object of the invention to provide an improved gas generator equipped with such an improved initiator.

### [Means for Solving the Problems]

According to the present invention, this object can be achieved by an initiator as defined in claim 1. The dependent claims define preferred and advantageous embodiments of the invention.

An initiator of the present invention comprises a casing, a reactant disposed within the casing, electrodes arranged in contact with the reactant, characterized in that the reactant contains electrically conductive substances in a manner such that, once a voltage is applied to the electrodes, an electric current flows through the electrically conductive substances, thereby rendering the reactant to start its reaction.

In using the initiator of the present invention, once a voltage is applied across the electrodes, an electric current will flow between the electrodes through the electrically conductive substances contained within the reactant, thereby rendering the electrically conductive substances to produce a heat. This heat causes the reactant to start its reaction, and this reaction in turn generates a high pressure gas and an amount of heat which cause the ignition of a gas generating agent in a gas generator. Actually, since such an initiator contains in its reactant electrically conductive substances instead of using a filament, it is possible to simplify the manufacturing process, making it sure to manufacture products having a uniform quality, at a high yield and a low cost.

### [Brief Description of the Drawings]

Fig. 1 provides cross sectional views showing an initiator formed according to an embodiment of the present invention.
Fig. 2 is a cross sectional view showing an initiator formed according to another embodiment of the present invention.
Fig. 3 is a cross sectional view showing an initiator formed according to a further embodiment of the present invention.
Fig. 4 is a cross sectional view showing an initiator formed according to an embodiment of the present invention.
Fig. 5 is a cross sectional view showing an initiator formed according to an embodiment of the present invention.
Fig. 6 is a cross sectional view showing an initiator formed according to an embodiment of the present invention.
Fig. 7 is a cross sectional view showing an initiator formed according to an embodiment of the present invention.
Fig. 8 is a cross sectional view showing a conventional initiator.
Fig. 9 is a cross sectional view showing an example of a gas generator.
Fig. 10 is a cross sectional view showing an initiator formed according to an embodiment of the present invention.
Fig. 11 is a cross sectional view showing an initiator formed according to an embodiment of the present invention.

### [Embodiments of the Invention]

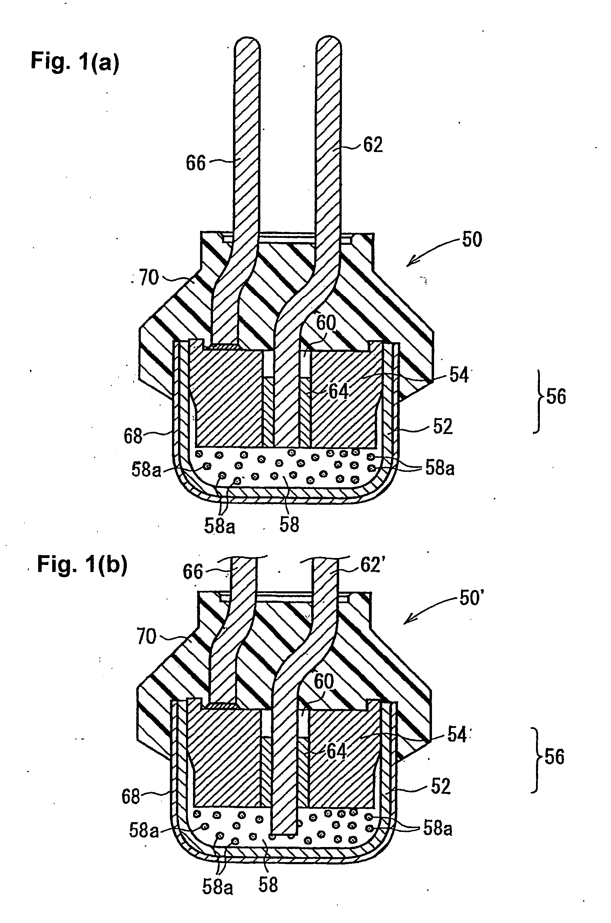

In the following, several embodiments of the present invention will be described with reference to the accompanying drawings. Fig. 1 to Fig. 7 are cross sectional views showing initiators formed according to several embodiments of the present invention.

Referring to Fig. 1(a), an initiator 50 has a casing 56 including a cup 52 and a head 54 which is inserted in the cup 52 through its opening. An internal space of the casing 56 is filled with an amount of reactant 58. In the present embodiment, the cup 52 is a circular container formed by SUS 304 or the like, and the head 54 is a substantially circular member also formed by SUS 304 or the like. Specifically, the outer circumferential surface of the head 54 is secured onto the inner circumferential surface of the cup 52 by welding and the like.

An internal space is formed between the front end face of the head 54 and the bottom surface of the cup 52, while the reactant 58 is received in the internal space.

A through hole 60 is formed through the central portion of the head 54 and arranged in the thickness direction thereof. An electrode pin 62 is inserted in the through hole 60 and is secured in the head 54 by means of an insulating securing material 64 such as a glass and the like. Further, in the present embodiment, the front end face of the pin 62 is at exactly the same height as that of the front end face of the head 54. Moreover, another electrode pin 66 is secured by welding and the like on the rear end face of the head 54.

The outer surface of the cup 52 is covered by a resin cover 68 formed by a nylon, a polypropylene or the like. On the other hand, the rear portion of the cup 52 as well as the rear end face of the head 54 are covered by a resin cover 70 formed by a nylon, a polybutylene phthalate or the like. Both the pin 62 and the pin 66 are arranged protruding outwardly through the resin cover 70.

Here, the reactant 58 contains a reactive component which may be a valve metal such as Al, Ti and the like each having a rectifying function, also contains an amount of an electrically conductive particles 58a. In practice, such electrically conductive particles 58a are preferably to be metal particles and/or metal oxide particles. As metal particles, it is preferable to use aluminum particles, magnesium particles, tantalum particles, zirconium particles, copper particles, or the like.

As metal oxide particles, it is preferable to use oxide particles such as Ti₂O₃ particles, MoO₂ particles, MnO₂ particles or the like, each of which has an electric conductivity and can also function as an oxidant. Preferably, the specific resistance of each of these electrically conductive metal oxide particles is less than or equal to 0.1 Qm.

The reactant is also allowed to contain both metal particles and electrically conductive oxide particles.

Further, the reactant is also allowed to contain non-conductive oxidant particles. For example, it is possible for the reactant to contain both metal particles and non-conductive oxidant particles.

In using the initiator 50 having the above-described structure, once a voltage is applied between the pins 62 and 66, an electric current will flow between the pin 62 and the head 54, through the electrically conductive particles 58a contained in the reactant 58. Then, due to a Joule heat generated by the electric current flowing therethrough, the reactant 58 starts to react, thus producing a high pressure gas containing hot particles. At this time, if the reactant 58 contains oxidant particles, the desired reaction may be accelerated due to an oxidizing action produced by the oxidant particles. On the other hand, if the electrically conductive particles 58a contain both the electrically conductive oxidant particles and metal particles, the electrically conductive oxidant will produce its oxidizing action during exothermic process, thereby enabling the metal particles to be quickly oxidized and thus producing a desired heat.

In the present embodiment, since it is not necessary to use filament (wire bridge), it is possible to greatly reduce the manufacturing cost.

Although it has been shown in Fig. 1(a) that the front end face of the pin 62 is at exactly the same height as that of the front end face of the head 54, it is in fact also possible for the front end of the pin 62' to project beyond the head 54 so as to extend into the reactant 58, in a manner adopted by another initiator 50' shown in Fig. 1(b). In this way, it is possible to ensure an increased area between a pin 62' and the electrically conductive particles 58a dispersed in the reactant 58. However, since other portions and elements of the initiator 50' shown in Fig. 1(b) are exactly the same as those of the initiator 50 shown in Fig. 1(a), the same portions and elements are represented by the same reference numerals.

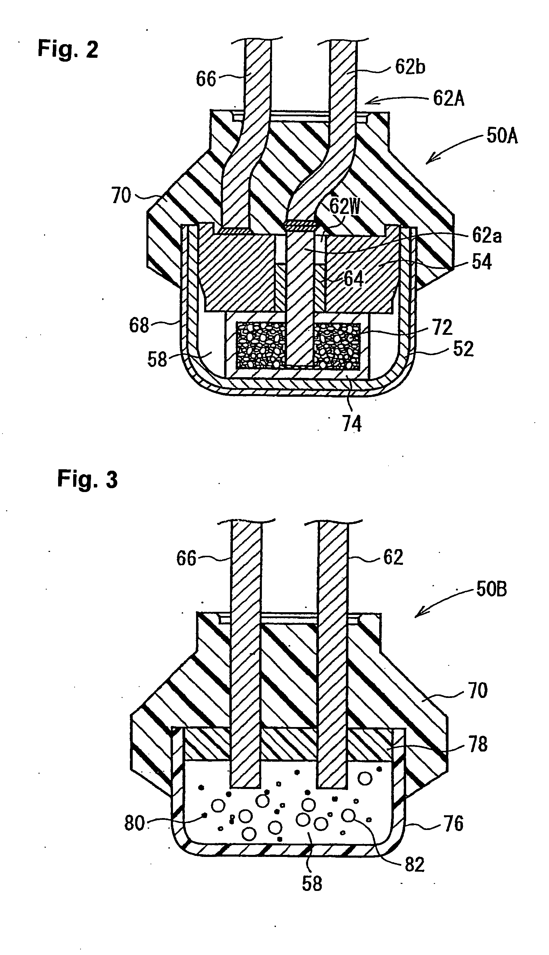

A further initiator 50A shown in Fig. 2 has a pin 62A including a front portion 62a and a rear portion 62b which are connected with each other by means of welding. The front portion 62a of the pin has been integrally connected in advance with a solid electrically conductive oxidant 72. In fact, the front portion 62a of the pin is inserted through the hole 60 of the head 54 and is welded to the rear portion 62b of the pin. Here, the reference number 62W represents a welded position. The solid electrically conductive oxidant 72 is surrounded by a surrounding material 74. The surrounding material 74 is formed by a metal. However, since other portions and elements of this initiator are exactly the same as those of the initiator 50 shown in Fig. 1(a), the same portions and elements are represented by the same reference numerals.

A still further initiator 50B shown in Fig. 3 employs a casing including a cup 76 formed by a synthetic resin and a plug 78 which is also formed by a synthetic resin, while an internal space within the casing is filled with the reactant 58. In fact, the reactant 58 contains an amount of metal particles 80 and an amount of electrically conductive oxide particles 82. The pins 62 and the pin 66 are provided passing through the resin cover 70 as well as the plug 78, and protruding into the reactant 58. However, it is also allowed to use non-conductive oxide particles instead of using the electrically conductive oxide particles 82.

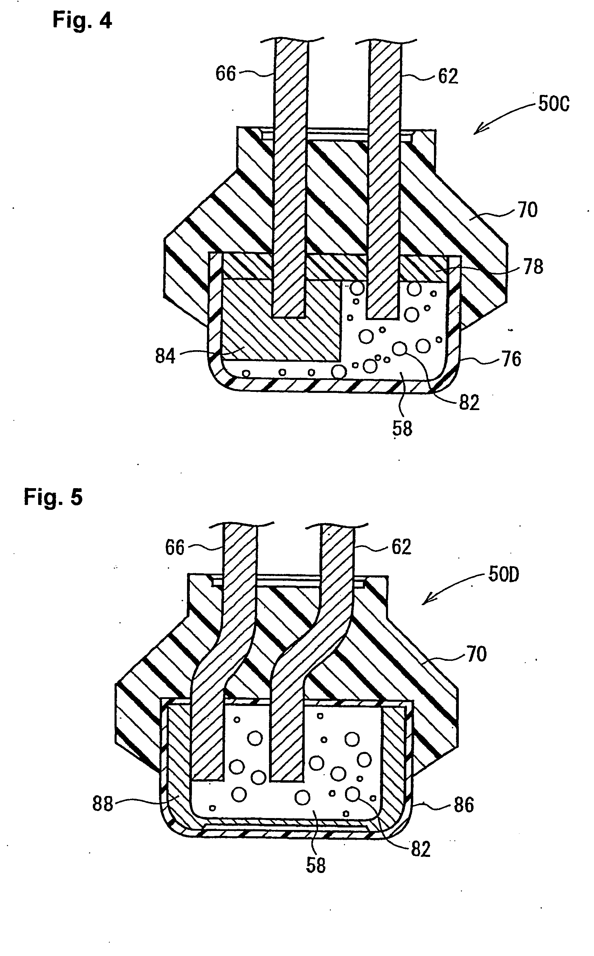

A still further initiator 50C shown in Fig. 4 is formed by fixing a metal block 84 at the front end of the pin 66 of the initiator 50B shown in Fig. 3. However, the reactant 58, although containing electrically conductive oxide particles 82, does not contain metal particles.

A still further initiator 50D shown in Fig. 5 is formed by using a box-like casing 86 which is made of a synthetic resin and contains an amount of reactant 58. As shown in the drawing, a metal cup 88 is provided along the side face as well as the bottom face of the casing 86. In fact, the metal cup 88 is in electrical contact with the pin 66.

However, the reactant 58 contains only electrically conductive oxide particles 82, and does not contain metal particles.

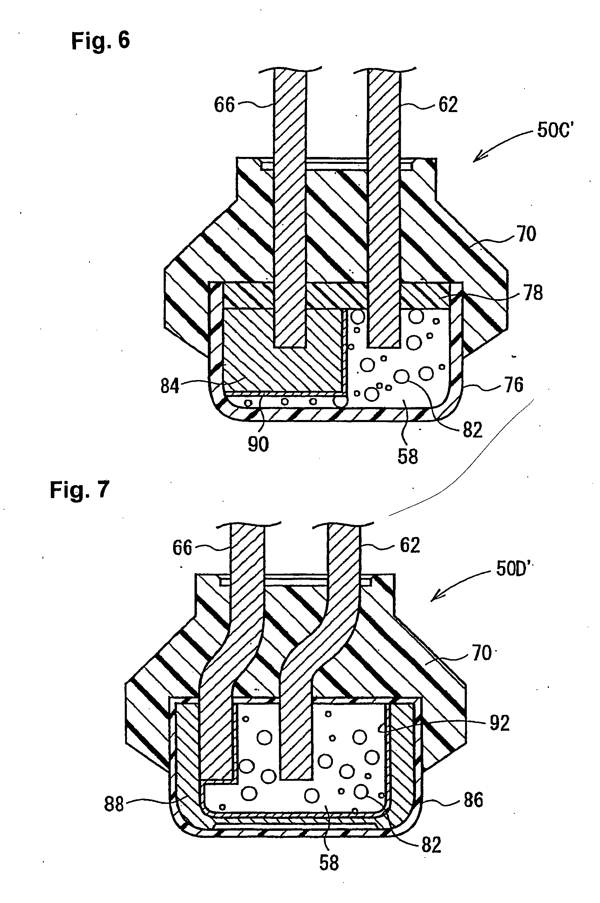

Two more initiators 50C' and 50D' shown respectively in Fig. 6 and Fig. 7, are formed on the basis of the initiators 50C and 50D shown respectively in Fig. 4 and Fig. 5, except that the metal block 84 and the metal cup 88 are respectively covered by an oxidized film 90 and an oxidized film 92, thereby adjusting an electric resistance between the pin 62 and the pin 66. Here, although the oxidized film 92 is provided on the inner surface of the metal cup 88 and the outer surface of the pin 66, it is not provided on an interface between the metal cup 88 and the pin 66.

However, when the pins 62 and 66 are electrically conducting with each other, the oxidized films 90 and 92 will be broken, making it possible to expect a further effective heat producing action.

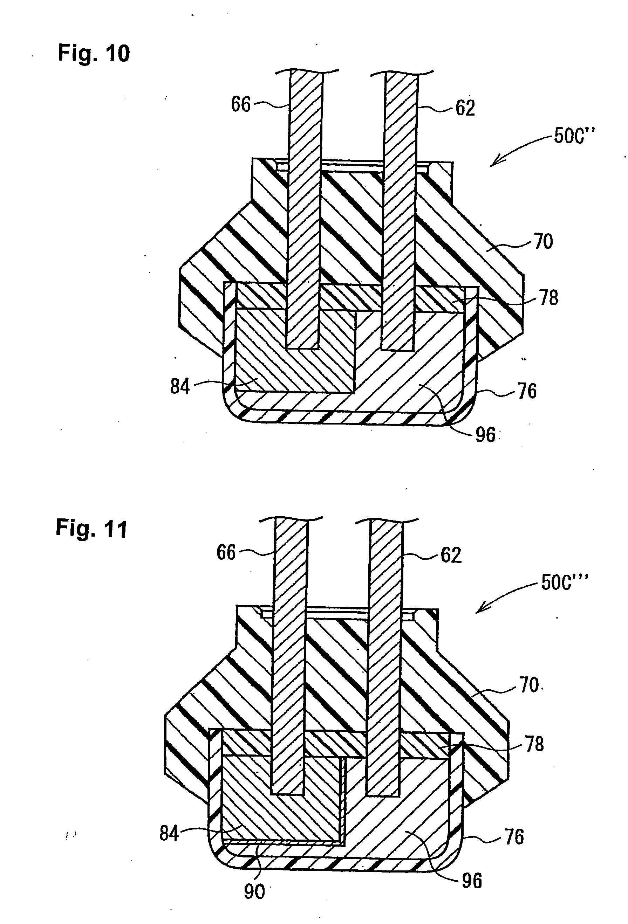

In addition, still two more initiators 50C" and 50C'" shown respectively in Fig. 10 and Fig. 11 are formed on the base of the initiators 50C and 50C' shown respectively in Fig. 4 and Fig. 6, except that an electrically conductive oxide block 96 is used to replace the reactant 58 as well as the electrically conductive particles 58a, thereby ensuring a simplified manufacturing process.

In the present invention, the aforementioned metal block, metal cup as well as the electrically conductive oxides are all allowed to have porous surfaces. By virtue of such porous surfaces, it is possible to improve reaction sensitivity.

Actually, as reactant containing metal particles and electrically conductive oxidant particles preferably a composition not listed in the powder list, which is forbidden according to Active Carbon Regulation, is used.

Each of the above-described embodiments is only an example of the present invention. In fact, the present invention is also allowed to have other embodiments than those illustrated in the accompanying drawings. For example, the casing is allowed to have other shapes than those illustrated in the drawings. Similarly, the shape and the number of the electrodes are allowed to be different from those shown in the accompanying drawings. In more detail, the casing is allowed to have a long and narrow cylindrical shape so that it can be used in a gas generator of an air bag apparatus for a passenger seat.

Practically, the initiator of the present invention can be applied to gas generators of various types. Moreover, such an initiator can be incorporated into an air bag apparatus and a seat belt tensioner of various types, for use in a driver seat, a passenger seat, a rear seat, to protect a side portion and a head portion of a person's body, as well as to protect pedestrians.

### [Advantages]

As described above, with the use of the present invention, since a bridge wire is not used, it is allowed to dispense with a welding step during the manufacturing process, thereby making it possible to provide an improved initiator easy to be manufactured and low in manufacturing cost, as well as an improved gas generator equipped with such an improved initiator.

## Claims

1. An initiator comprising a casing (56), a reactant (58) disposed within the casing (56), electrodes (62; 62'; 62A; 66) arranged in contact with the reactant (58),
wherein the reactant (58) contains electrically conductive substances (58a), in a manner such that once a voltage is applied to the electrodes (62; 62'; 62A; 66), an electric current flows through the electrically conductive substances (58), thereby rendering the reactant to start its reaction.

2. An initiator according to claim 1, wherein the electrically conductive substances (58a) include metal (80; 84) and/or metal oxide (82; 96) particles.

3. An initiator according to claim 1, wherein the reactant (58) contains metal oxide particles 82; 96) having an oxidizing action, and metal particles (80; 84) serving as an electrically conductive substance.

4. An initiator according to any one of claims 1 to 3,
wherein the electrodes (62; 62'; 62A; 66) are pin-like members, with the front end portions thereof extending into the reactant (58).

5. An initiator according to any one of claims 1 to 4,
wherein a metal member (84) is provided in an electric connection with the electrodes (62; 62'; 62A; 66) and in contact with the reactant (58), and the metal member's surface in contact with the reactant (58) is covered with an oxidized film (90).

6. A gas generator (30) containing a gas generating agent (42), an initiator (50; 50'; 50A; 50B; 50C; 50C'; 50C"; 50C"'; 50D; 50D') for initializing a gas generating reaction of the gas generating agent (42), **characterized in that** the initiator (50; 50'; 50A; 50B; 50C; 50C'; 50C"; 50C"'; 50D; 50D') is an initiator recited in any one of claims 1 to 5.
